Europäisches Patentamt

(19) European Patent Office

Office européen des brevets

(11) Veröffentlichungsnummer: **0 246 556**
**B1**

(12) # EUROPÄISCHE PATENTSCHRIFT

(45) Veröffentlichungstag der Patentschrift:
22.11.90

(51) Int. Cl.⁵: **H04L 1/24**, G05B 19/04

(21) Anmeldenummer: 87106944.9

(22) Anmeldetag: 13.05.87

(54) Schaltungsanordnung zum Überwachen einer Steuereinheit.

(30) Priorität: 16.05.86 DE 3616523

(43) Veröffentlichungstag der Anmeldung:
25.11.87 Patentblatt 87/48

(45) Bekanntmachung des Hinweises auf die Patenterteilung:
22.11.90 Patentblatt 90/47

(84) Benannte Vertragsstaaten:
DE GB NL

(56) Entgegenhaltungen:
CH-A- 565 407

PATENT ABSTRACTS OF JAPAN, Band 7,
Nr. 266 (P-239)[141], 26. November 1983; &
JP-A-58 146 100

(73) Patentinhaber: Siemens Aktiengesellschaft,
Wittelsbacherplatz 2, D-8000 München 2(DE)

(72) Erfinder: Dach, Helmut, Am Bünberg 33,
D-6440 Bebra 1(DE)
Erfinder: Grenzebach, Kurt, Ing. grad., Zur
Biberkampfbahn 13, D-6440 Bebra 1(DE)

**Beschreibung**

Die Erfindung bezieht sich auf eine Schaltungsanordnung zum Überwachen einer Steuereinheit gemäß dem Oberbegriff des Patentanspruchs 1.

Ein solches Verfahren ist aus der CH-A 565 407 bekannt.

Zum Überwachen einer Steuereinheit, insbesondere zum Verhindern einer fehlerhaften Übertragung von codierten Daten über eine Datenübertragungsstrecke ist es denkbar, die Steuereinheit redundant aufzubauen und bei einem Nichtübereinstimmen der von mehreren gleichen Teilen der Steuereinheit abgegebenen codierten Daten deren Übertragung zu verhindern.

Es ist auch denkbar, am Ausgang der Datenübertragungseinheit eine Überwachungsschaltung vorzusehen, die die gesendeten Daten überwacht und beim Auftreten von fehlerhaft codierten Daten die Übertragung sperrt. Hier kann jedoch der Fall eintreten, daß bei einer fehlerhaften Funktion der Überwachungsschaltung ungewollt fehlerhaft codierte Daten über die Übertragungsstrecke gesendet werden.

Sowohl der redundante Aufbau als auch die zusätzliche Überwachungsschaltung erfordern einen verhältnismäßig großen Aufwand für die Überwachung der Steuereinheit. Da sie verhältnismäßig viele Bauteile aufweisen, besteht damit wiederum die Gefahr, daß diese zusätzlichen Einheiten fehlerhaft arbeiten.

Der Erfindung liegt daher die Aufgabe zugrunde, eine Schaltungsanordnung zum Überwachen einer Steuereinheit anzugeben, die einerseits einen geringen Aufwand erfordert und die andererseits die Überwachung mit großer Zuverlässigkeit durchführt.

Erfindungsgemäß wird die Aufgabe bei der Schaltungsanordnung der eingangs genannten Art durch die im kennzeichnenden Teil des Patentanspruchs 1 angegebenen Merkmale gelöst.

Die Schaltungsanordnung gemäß der Erfindung hat den Vorteil, daß sie eine einfache und wirtschaftliche Funktionskontrolle einer Steuereinheit ermöglichen und daß sie ein fehlerhaftes Arbeiten von Schaltkreisen der Steuereinheit sehr schnell erkennen lassen.

Falls die Steuereinheit für eine Übertragung von codierten Daten, insbesondere nach einem vorgegebenen Algorithmus codierte Daten vorgesehen sind, ist es äußerst vorteilhaft, wenn zumindest ein Teil der Steuersignale die Datensignale darstellt und ein Teil der im Festwertspeicher gespeicherten Binärzeichen mit den Datensignalen übereinstimmt, wenn diese zulässige Kombinationen darstellen.

In dem Festwertspeicher können als Binärzeichen auch Zustandszeichen gespeichert sein, die einem Teil der Adresseneingänge des Festwertspeichers zuführbar sind und die dem jeweils folgenden Zustand der Steuereinheit zugeordnet sind. Die Zustandszeichen werden dem Festwertspeicher zweckmäßigerweise über ein dem Adressenregister des Festwertspeichers vorgeschaltetes weiteres Register zugeführt.

Bei dem Auftreten von unzulässigen Kombinationen der Steuersignale stellt mindestens ein Teil der Binärzeichen Diagnosezeichen für eine Fehlerdiagnose der Steuereinheit dar. Diese Diagnosezeichen werden insbesondere nur dann ausgewertet, wenn das Fehlersignal abgegeben wird und damit eine unzulässige Kombination der Steuersignale vorliegt.

Das Fehlersignal kann auch zum Einstellen eines vorgegebenen Steuerzustandes, beispielsweise eines Ausgangszustands der Steuereinheit zugeführt werden. Es dient dabei beispielsweise als Rücksetzsignal.

Ein Ausführungsbeispiel der Schaltungsanordnung gemäß der Erfindung wird im folgenden anhand von Zeichnungen näher erläutert. Es zeigen

Fig. 1 ein Blockschaltbild der Schaltungsanordnung,
Fig. 2 ein Schaltbild der Schaltungsanordnung und
Fig. 3 eine Darstellung eines Speicherinhalts.

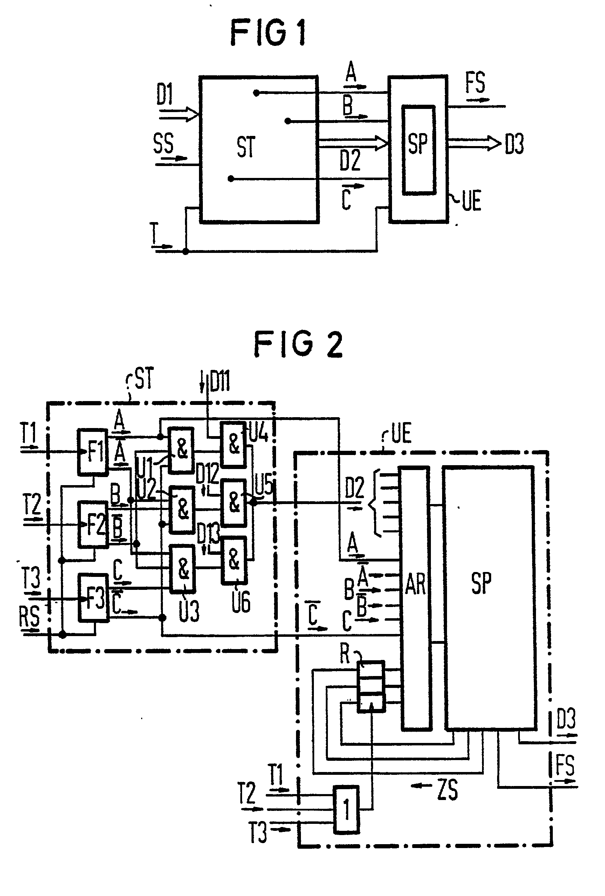

Bei dem in Fig. 1 dargestellten Blockschaltbild ist eine Steuereinheit ST vorgesehen, die als aus Verknüpfungsgliedern aufgebautes Schaltnetz oder aus Verknüpfungsgliedern und Speichergliedern gebildetes Schaltwerk ausgebildet ist. Der Steuereinheit ST werden Steuersignale SS zugeführt, die bestimmte Zustände in der Steuereinheit ST einstellen. Die Einstellung der Zustände kann unter Verwendung von Taktsignalen T erfolgen. Falls die Steuereinheit ST für eine Übertragung von Daten vorgesehen ist, werden dieser Datensignale D1 zugeführt. Zum Überwachen der Steuereinheit ST ist eine Überwachungseinheit UE vorgesehen, die einen Festwertspeicher SP enthält. Der Überwachungseinheit UE werden von verschiedenen Stellen der Steuereinheit ST Steuersignale A bis C und gegebenenfalls den Datensignalen D1 zugeordnete Datensignale D2 zugeführt. Die Steuersignale A bis C und die Datensignale D2 werden verschiedenen Verknüpfungsgliedern und/oder Speichergliedern der Steuereinheit ST entnommen und in dem Festwertspeicher SP sind zulässigen und unzulässigen Kombinationen dieser Steuersignale A bis C und der Datensignale D2 zugeordnete Binärzeichen gespeichert. Die Binärzeichen enthalten u. a. ein Fehlerzeichen, das einem von der Übertragungseinheit UE abgegebenen Fehlersignal FS zugeordnet ist. Dieses Fehlersignal FS tritt immer dann auf, wenn das Fehlerzeichen einen vorgegebenen Binärwert aufweist, der auf eine unzulässige Kombination der Steuersignale A bis C und der Datensignale D2 hinweist.

Bei einer Übertragung von Daten können die Binärzeichen auch Datenzeichen enthalten, die den Datensignalen D2 zugeordnet sind und die als Datensignale D3 abgegeben werden, wenn kein Fehlersignal FS auftritt. Bei unzulässigen Kombinationen können die Datensignale D3 beim Auftreten des Fehlersignals FS auch zur Diagnose der Steuereinheit ST verwendet werden. Weiterhin können die Binärzeichen auch Zustandszeichen darstellen, um Datensignale D3 nur bei vorgegebenen Zuständen oder vorgegebenen Folgen von Zuständen abzugeben, wobei die Folgen der Zustände durch die Taktsignale T ausgelöst werden. Die Datensignale D3 können dabei mit den Datensignalen D2 im fehlerfreien Fall übereinstimmen und codierte Daten zugeordnet sein. Es ist auch möglich, im Festwertspeicher SP eine Umcodierung vorzunehmen. Falls die Datensignale D3 mit den Datensignalen D2 übereinstimmen sollen, wird durch die Verwendung des Festwertspeichers SP in den Datenweg eine quasi galvanische Trennung der Datensignale D2 und D3 erreicht, denn die Datensignale D2 adressieren über die innere Struktur des Festwertspeichers wiederum Daten, die den Datensignalen D3 zugeordnet sind. Die Datensignale D3 stimmen zwar mit den Datensignalen D2, die als Adressensignale dienen, überein, aber sie stehen jedoch in keiner direkten technischen Beziehung zueinander. Dies kann insbesondere bei der Übertragung von besonders codierten Daten von Vorteil sein.

Bei dem in Fig. 2 dargestellten Schaltbild ist beispielsweise dargestellt, daß als Datensignale D1 Datensignale D11, D12 und D13 von verschiedenen Datenquellen nach bestimmten Steuerungsbedingungen zum Ausgang als Datensignale D2 durchgeschaltet werden sollen. Ausgehend von einem durch ein Rücksetzsignal RS als Steuersignal SS eingestellten Zustand von drei Flipflops F1 bis F3 soll jeweils eines der Datensignale D11, D12 oder D13 zum Ausgang der Schaltungsanordnung durchgeschaltet werden. Die Auswahl erfolgt durch die Taktsignale T1 bis T3. Beim Auftreten des Taktsignals T1 wird das Flipflop F1 gesetzt und wenn die Flipflops F2 und F3 zurückgesetzt sind, gibt ein UND-Glied U1 ein UND-Glied U4 frei und die Datensignale D11 werden zum Ausgang der Steuereinheit ST durchgeschaltet. In entsprechender Weise werden nach dem Auftreten des Taktsignals T2, wenn die Flipflops F1 und F3 zurückgesetzt sind bzw. nach dem Auftreten des Taktsignals T3, wenn das Flipflop F3 gesetzt und die Flipflops F1 und F2 zurückgesetzt sind über die UND-Glieder U2 bzw. U3 die UND-Glieder U5 bzw. U6 freigegeben und die Datensignale D12 bzw. D13 werden zum Ausgang durchgeschaltet.

Die von den Flipflops F1 bis F3 abgegebenen Steuersignale A bis C und deren Komplemente $\overline{A}$ bis $\overline{C}$ werden als Steuersignale der Überwachungseinheit UE gemeinsam mit den Datensignalen D2 zugeführt. Sie dienen als mindestens ein Teil der Adressensignale für den Festwertspeicher SP und werden dessen Adressenregister AR zugeführt. Die Überwachungseinheit UE prüft nun, ob die entsprechenden Datensignale D11 bis D13 beim Auftreten der entsprechenden Steuersignale A bis C zulässig sind. Zu diesem Zweck enthält der Festwertspeicher SP Binärzeichen, die zulässige und unzulässige Kombinationen der Steuersignale A bis C und der Datensignale D2 kennzeichnen.

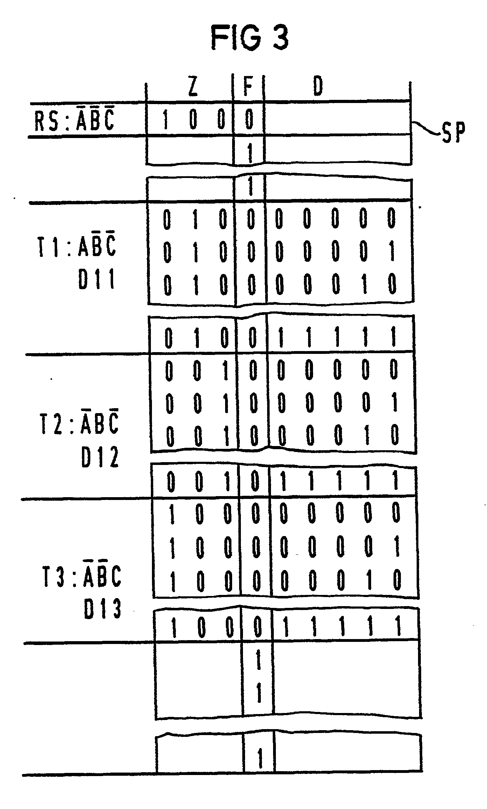

Bei dem in Fig. 3 schematisch dargestellten Inhalt des Festwertspeichers stellen die gespeicherten Binärzeichen Zustandszeichen Z, Fehlerzeichen F und Datenzeichen D dar. Die Datenzeichen D stellen zu übertragende Datensignale D3 dar oder andere, z. B. Statusinformationen, wenn die Fehlerzeichen F den Binärwert 0 haben und somit ein fehlerfreier Fall vorliegt. Wenn das Fehlerzeichen F den Binärwert 1 hat, tritt eine unzulässige Kombination der Steuersignale A bis C und/oder der Datensignale D2 auf und in diesem Fall können die Datenzeichen D zur Diagnose des Fehlers verwendet werden.

Beim Auftreten des Rücksetzsignals RS an der Steuereinheit ST tritt eine zulässige Kombination der Steuersignale $\overline{A}$, $\overline{B}$, $\overline{C}$ mit den Binärwerten 111 auf und das Fehlerzeichen F hat den Binärwert 0, so daß kein Fehlersignal FS abgegeben wird. Die Datenzeichen D haben in diesem Fall zweckmäßigerweise den Binärwert 0, so daß keine Datensignale D3 im gesamten dressierbereich abgegeben werden, der durch die Signale $\overline{A}$, $\overline{B}$ und $\overline{C}$ mit den Binärwerten 111 festgelegt ist.

Wenn mit dem Taktsignal T1 das Flipflop F1 gesetzt wird und wie oben erwähnt, die Datensignale D11 als Datensignale D2 durchgeschaltet werden, werden in dem Festwertspeicher SP wiederum Bereiche adressiert, bei denen die Fehlerzeichen F den Binärwert 0 haben. Die Datenzeichen D entsprechen in diesem Fall beispielsweise den Datensignalen D11 und es werden als Datensignale D3 entsprechende Signale ausgegeben.

Wenn mit dem Taktsignal T2 das Flipflop F2 gesetzt wird und mit dem Taktsignal T1 das Flipflop F1 zurückgesetzt wird, werden die Datensignale D12 als Datensignale D2 durchgeschaltet und es handelt sich wiederum um einen zulässigen Zustand, so daß die Fehlerzeichen F den Binärwert 0 aufweisen. Auch hier entsprechen dann die Datenzeichen D den Datensignalen D12.

Wenn mit dem Taktsignal T3 das Flipflop F3 gesetzt wird und mit dem Taktsignal T2 das Flipflop F2 zurückgesetzt wird, werden die Datensignale D13 als Datensignale D2 durchgeschaltet und da es sich dabei wiederum um eine zulässige Kombination handelt, haben auch hier die Fehlerzeichen F den Binärwert 0 und die Datenzeichen D entsprechen den Datensignalen D13.

Bei den obigen Ausführungen wurde davon ausgegangen, daß als zulässig nur angesehen wird, daß alle Flipflops F1 bis F3 zurückgesetzt sind oder nur jeweils eines der Flipflops F1 bis F3 gesetzt ist. Alle übrigen Zustände der Flipflops F1 bis f3 gelten als Fehler. Wenn daher in dem Festwertspeicher SP Bereiche adressiert werden, die den entsprechenden Steuersignalen A, B und C zugeordnet sind, weist das Fehlerzeichen F immer den Binärwert 1 auf und es wird ein Fehlersignal FS erzeugt. Dieses Fehlersignal FS kann für eine Fehleranzeige verwendet werden. Es kann aber auch zum Einstellen eines vorgegebenen Zustands in der Steuereinheit ST, beispielsweise als Rücksetzsignal RS verwendet werden. Mit dem Fehlersignal FS kann auch das Aussenden der Datensignale D3 gesperrt werden und die Datenzeichen D können für die Diagnose des Fehlers verwendet werden. Falls beispielsweise die Datenzeichen D dann an einer Anzeigeeinheit ausgegeben werden, kann aus der Zeichenfolge auf den Zustand in der Steuereinheit ST geschlossen werden. Die Auswertung kann selbstverständlich auch automatisch unter Verwendung eines Mikrorechners erfolgen.

Die Organisation im Speicher kann derart durchgeführt werden, daß beispielsweise durch die Steuersignale A, B, C jeweils eine Seite in dem Festwertspeicher SP aufgerufen wird, während durch die Datensignale D2 jeweils eine Zeile dieser Seite aufgerufen wird. Die Seitenzahl des Festwertspeichers SP richtet sich nach der Anzahl der zu überwachenden Steuersignale, während die Anzahl der Zeilen pro Seite eine Funktion der zu überwachenden Wortlänge des jeweiligen Datenwortes D2 ist.

Für sechs Steuergrößen A, B, C und $\overline{A}$, $\overline{B}$, $\overline{C}$ sind beispielsweise 64 Seiten erforderlich und bei Datenwörtern mit fünf Bit Länge sind jeweils 32 Zeilen pro Seite erforderlich.

Falls in bestimmten Zuständen der Steuereinheit ST verschiedene Datensignale D3 nicht abgegeben werden dürfen, können diese durch ein entsprechendes Fehlerzeichen F gekennzeichnet werden, so daß dann eine Aussendung dieser Zeichen verhindert wird und somit bestimmte Bitkombinationen der Datensignale D2 erlaubt oder verboten werden können.

Mit Hilfe der Überwachungseinheit UE ist es auch möglich, die zeitliche Aufeinanderfolge der Zustände zu überwachen. Falls beispielsweise immer auf den durch das Taktsignal T1 in Fig. 3 gekennzeichneten Zustand der mit T2 und dann der mit T3 gekennzeichnete Zustand folgen muß und jede andere Reihenfolge nicht erlaubt ist, muß sichergestellt sein, daß in allen anderen Fällen ein Fehlersignal FS erzeugt wird. Bei der Schaltungsanordnung erfolgt dies unter Verwendung der Zustandszeichen Z. Diese Zustandszeichen Z geben bei jedem Zustand den jeweils nächstfolgenden Zustand an, um eine genaue Sequenz sicherzustellen. Bei dem in den Fig. 2 und 3 dargestellten Beispiel folgt auf den durch das Rücksetzsignal RS gekennzeichneten Zustand der durch das Taktsignal T1 gekennzeichnete Zustand. Als Zustandszeichen Z sind bei dem durch das Rücksetzsignal RS gekennzeichneten Zustand die Binärzeichen 100 gespeichert, die den Steuersignalen A, B, C entsprechen. Als nächster Zustand muß somit der Zustand eintreten, bei dem das Steuersignal A den Binärwert 1 und die übrigen Steuersignale den Binärwert 0 haben. Die Zustandszeichen Z werden als Zustandssignale ZS einem Register zugeführt und mit dem Auftreten der Taktsignale T1 bis T3 werden diese Zustandssignale ZS in das Register R eingespeichert und dienen zur Adressierung beim jeweils nachfolgenden Zustand. In dem Register R sind somit beim Auftreten des Taktsignals T1 die Zustandszeichen Z mit den Binärwerten 100 eingespeichert und für die Adressierung verwendet.

Der durch das Taktsignal T1 in Fig. 3 gekennzeichnete Zustand wird nur dann adressiert, wenn in dem Register R die Zustandszeichen Z gespeichert sind und tatsächlich auch nur das Flipflop F1 gesetzt und die übrigen Flipflops F2 und F3 zurückgesetzt sind. In allen anderen Fällen werden andere Speicherbereiche adressiert, bei denen die Fehlerzeichen F den Binärwert 1 aufweisen, so daß ein Fehlersignal FS erzeugt wird. In entsprechender Weise werden nun die Zustandszeichen Z mit den Binärwerten 010 zum Zeitpunkt T2 in das Register R eingespeichert und die richtigen Speicherbereiche werden nur dann adressiert, wenn nur das Flipflop F2 gesetzt ist und schließlich werden mit dem Taktsignal T3 die Zustandszeichen 001 in das Register R eingespeichert und die entsprechenden Speicherbereiche nur dann adressiert, wenn nur das Flipflop F3 gesetzt ist.

Bei dem dem Taktsignal T3 zugeordneten Zustand sind als Zustandszeichen Z die Binärzeichen 100 gespeichert, die den durch die Taktsignale T1 einstellbaren Zustand kennzeichnen, so daß anschließend jeder andere Zustand verboten ist.

Durch die Einbeziehung der Zustandszeichen Z in die Adressierung des Festwertspeichers SP wird in vorausschauender Weise die Vorgabe zur Anwahl der jeweils nächstgültigen Seite vorgenommen und damit die Kontrolle über den sequentiellen Ablauf der Steuersignale A bis C gewährleistet. Dadurch ist eine Seite des Festwertspeichers SP solange angewählt, wie über die Taktsignale T1 bis T3 die entsprechende Adresse angelegt ist. In diesem Adressierungsschema sind die Zustandszeichen Z aus den Binärzeichen miteinbezogen. Bei einem ungestörten Ablauf wirken die Steuersignale A bis C in der zeitlichen Reihenfolge entsprechend den Taktsignalen T1 bis T3 auf die Seitenadressierung ein. In die Adressierung werden sämtliche in der Steuereinheit ST benötigten Steuergrößen A, B, C und $\overline{A}$, $\overline{B}$ und $\overline{C}$ einbezogen. Damit ist gewährleistet, daß beim Ausfall einer Bedingung eine andere Adresse gebildet wird, die in dem ungestörten Ablauf nicht angewählt werden kann. Es wird damit zu den durch die Taktsignale T1 bis T3 festgelegten Zeitpunkten eine Seitenadresse vorgegeben, die eine bestimmte Seite adressiert.

Die Schaltungsanordnung gemäß der Erfindung hat den Vorteil, daß mit verhältnismäßig geringem Aufwand infolge der Hochintegration der Speicherelemente eine große Zahl von Steuergrößen überwacht werden kann. Die Überwachungsschaltung ist in einem Speichergehäuse untergebracht und sie ist damit sehr wirtschaftlich. Außerdem können bei automatischen Prüfverfahren Fehler in der Steuereinheit auf sehr einfache Weise diagnostiziert werden. Durch Umprogrammierung des Festwertspeichers SP oder durch Einsatz eines anderen Festwertspeichers kann die Überwachung an eine Änderung der Steuereinheit ST sehr einfach angepaßt werden.

## Patentansprüche

1. Schaltungsanordnung zum Überwachen einer Steuereinheit, wobei die Steuereinheit Speicherelemente und/oder Verknüpfungsglieder enthält, dadurch gekennzeichnet, daß eine Überwachungseinheit (UE) vorgesehen ist, die einen Festwertspeicher (SP) enthält, an dessen Adresseneingängen Steuersignale (A, B, C) von Speicherelementen und/oder Verknüpfungsgliedern der Steuereinheit (ST) anliegen und in dem zulässigen und unzulässigen Kombinationen der Binärwerte der Steuersignale (A, B, C) zugeordnete Binärzeichen (Z, F, D) gespeichert sind und daß der Festwertspeicher (SP) jeweils beim Auftreten von zulässigen bzw. unzulässigen Kombinationen der Steuersignale (A, B, C) in Abhängigkeit von einem als Binärzeichen (Z, F, D) gespeicherten Fehlerzeichen (F) ein bzw. kein Fehlersignal (FS) abgibt.

2. Schaltungsanordnung nach Anspruch 1, bei der die Steuereinheit zur Übertragung von Datensignalen vorgesehen ist, dadurch gekennzeichnet, daß an dem Festwertspeicher (SP) zusätzlich zu den Steuersignalen (A, B, C) die Datensignale (D2) anliegen und daß zumindest ein Teil der im Festwertspeicher (SP) gespeicherten Binärzeichen (D) den Datensignalen (D2) zugeordnet ist, wenn diese zulässige Kombinationen darstellen und daß diese Binärzeichen (D) als weitere Datensignale (D3) von dem Festwertspeicher (SP) ausgegeben werden.

3. Schaltungsanordnung nach Anspruch 2, dadurch gekennzeichnet, daß die Datensignale (D2, D3) in besonderer Weise codierte Datensignale sind.

4. Schaltungsanordnung nach einem der Ansprüche 1 bis 3, dadurch gekennzeichnet, daß in dem Festwertspeicher (SP) als Binärzeichen (Z, F, D) Zustandszeichen (Z) gespeichert sind, die als Teil der Adresse den Adresseneingängen des Festwertspeichers (SP) zuführbar sind und die dem jeweils folgenden Zustand der Steuereinheit (ST) zugeordnet sind.

5. Schaltungsanordnung nach Anspruch 4, dadurch gekennzeichnet, daß die Zustandszeichen (Z) an den Adresseneingängen des Festwertspeichers (SP) über ein Register (R) anliegen.

6. Schaltungsanordnung nach einem der Ansprüche 1 bis 5, dadurch gekennzeichnet, daß in dem Festwertspeicher (SP) in den durch die unzulässigen Kombinationen adressierten Bereichen als Binärzeichen (Z, F, D) Diagnosezeichen (D) gespeichert sind, die eine Fehlerdiagnose der Steuereinheit (ST) ermöglichen.

7. Schaltungsanordnung nach Anspruch 6, dadurch gekennzeichnet, daß die Diagnosezeichen (D) mit den Fehlerzeichen (F) verknüpft werden und daß die Diagnosezeichen (D) nur bei dem Auftreten der Fehlerzeichen (F) ausgewertet werden.

8. Schaltungsanordnung nach Anspruch 5 oder Anspruch 6, dadurch gekennzeichnet, daß die Diagnosezeichen (D) beim Auftreten der Fehlerzeichen (F) anstelle der Datensignale (D3) aus dem Festwertspeicher (SP) ausgegeben werden.

9. Schaltungsanordnung nach einem der Ansprüche 1 bis 8, dadurch gekennzeichnet, daß das Fehlersignal (FS) der Steuereinheit (ST) als ein Signal (RS) zum Einstellen eines vorgegebenen Steuerzustands zuführbar ist.

**Claims**

1. Circuit arrangement for monitoring a control unit, the control unit containing memory elements and/or logic elements, characterized in that a monitoring unit (UE) is provided which contains a read-only memory (SP), at the address inputs of which control signals (A, B, C) of memory elements and/or logic elements of the control unit (ST) are present, and in which permissible and impermissible combinations of the binary characters (Z, F, D) assigned to the binary-values of the control signals (A, B, C) are stored, and in that, in each case when permissible or impermissible combinations of the control signals (A, B, C) occur, the read-only memory (SP) outputs an error signal (FS) or no error signal respectively depending on an error character (F) stored as a binary character (Z, F, D).

2. Circuit arrangement according to claim 1, in which the control unit is provided for transmitting data signals, characterized in that, in addition to the control signals (A, B, C), the data signals (D2) are present at the read-only memory (SP), and in that at least a portion of the binary characters (D) stored in the read-only memory (SP) is assigned to the data signals (D2) when the latter represent permissible combinations, and in that said binary characters (D) are output by the read-only memory (SP) as further data signals (D3).

3. Circuit arrangement according to claim 2, characterized in that the data signals (D2, D3) are data signals coded in a particular manner.

4. Circuit arrangement according to one of claims 1 to 3, characterized in that condition characters (Z) are stored as binary characters (Z, F, D) in the read-only memory (SP), which condition characters can be fed as a portion of the address to the address inputs of the read-only memory (SP) and which are assigned to the respective next condition of the control unit (ST).

5. Circuit arrangement according to claim 4, characterized in that the condition characters (Z) are present at the address inputs of the read-only memory (SP) via a register (R).

6. Circuit arrangement according to one of claims 1 to 5, characterized in that diagnostic characters (D) which permit error diagnostics of the control unit (ST) are stored as binary characters (Z, F, D) in the read-only memory (SP) in the regions addressed by the impermissible combinations.

7. Circuit arrangement according to claim 6, characterized in that the diagnostic characters (D) are gated with the error characters (F), and in that the diagnostic characters (D) are only evaluated when the error character (F) occurs.

8. Circuit arrangement according to claim 5 or claim 6, characterized in that when the error characters (F) occur the diagnostic characters (D) are output from the read-only memory (SP) instead of the data signals (D3).

9. Circuit arrangement according to one of claims 1 to 8, characterized in that the error signal (FS) can be fed to the control unit (ST) as a signal (RS) for setting a predetermined control condition.

**Revendications**

1. Montage pour le contrôle d'une unité de commande, du type dans lequel l'unité de commande comporte des éléments de mémoire et/ou des éléments logiques, caractérisé par le fait qu'il est prévu une unité de contrôle (UE) qui comporte une mémoire morte (SP) aux entrées d'adresses de laquelle sont présents des signaux de commande (A, B, C) d'éléments de mémoire et/ou d'éléments logiques de l'unité de commande (ST), et dans laquelle sont mémorisés des chiffres binaires (Z, F, D) associés à des combinaisons admissibles et inadmissibles des valeurs binaires des signaux de commande (A, B, C), et que la mémoire morte (SP) émet ou n'émet pas un signal d'erreur (FS) à l'apparition de combinaisons admissibles ou inadmissibles combinaisons des signaux de commande (A, B, C), en fonction d'un signal d'erreur (F) mémorisé en tant que caractère codé binaire (Z, F, D).

2. Montage selon la revendication 1, dans lequel l'unité de commande est prévue pour transmettre des signaux de données, caractérisé par le fait qu'au niveau de la mémoire (SP) sont présents, en plus des signaux de commande (A, B, C), les signaux de données (D2) et qu'au moins une partie des chiffres binaires (D) qui sont mémorisés dans la mémoire morte (SP), est associée aux signaux de données (D2), lorsque ceux-ci représentent des combinaisons admissibles, et que ces chiffres binaires (D) sont émis en tant que signaux de données supplémentaires (D3), par la mémoire morte (SP).

3. Montage selon la revendication 2, caractérisé par le fait que les signaux de données (D2, D3) sont des signaux de données qui sont codés de façon particulière.

4. Montage selon l'une des revendications 1 à 3, caractérisé par le fait que dans la mémoire morte (FP) sont mémorisés, en tant que chiffres binaires (Z, F, D) des chiffres d'état (Z) qui sont susceptibles d'être appliqués, sous la forme d'une partie de l'adresse, aux entrées d'adresses de la mémoire morte (FP) et qui sont associés à l'état suivant de l'unité de commande (ST).

5. Montage selon la revendication 4, caractérisé par le fait que les caractères d'état (Z) sont appliqués, par l'intermédiaire d'un registre (R), aux entrées d'adresses de la mémoire morte (SP).

6. Montage selon l'une des revendications 1 à 5, caractérisé par le fait que dans la mémoire morte (SP), et dans les zones qui sont adressées par les combinaisons admissibles, sont mémorisés, en tant que chiffres binaires (Z, F, D), les caractères de diagnostic (D) qui permettent un diagnostic d'erreur de l'unité de commande (ST).

7. Montage selon la revendication 6, caractérisé par le fait que les caractères de diagnostic (D) sont combinés logiquement avec les caractères d'erreurs (F), et que les caractères de diagnostic (D) ne sont évalués qu'à l'apparition du caractère d'erreur (F).

8. Montage selon la revendication 5 ou la revendication 6, caractérisé par le fait que les caractères de diagnostic (D) sont émis par la mémoire morte (SP) lors de l'apparition du caractère d'erreur (F) à la place des signaux de données (D3).

9. Montage selon l'une des revendications 1 à 8, caractérisé par le fait que le signal d'erreur (FS) de l'unité de commande (ST) est susceptible d'être appliqué à l'unité de commande (ST) sous la forme d'un signal (RS) pour ajuster un état de commande prédéterminé.

# FIG 1

# FIG 2

# FIG 3

| | Z | | | F | D | | | | |
|---|---|---|---|---|---|---|---|---|---|
| RS: $\bar{A}\bar{B}\bar{C}$ | 1 | 0 | 0 | 0 | | | | | |
| | | | | 1 | | | | | |
| | | | | 1 | | | | | |
| T1: $A\bar{B}\bar{C}$ | 0 | 1 | 0 | 0 | 0 | 0 | 0 | 0 | 0 |
| | 0 | 1 | 0 | 0 | 0 | 0 | 0 | 0 | 1 |
| D11 | 0 | 1 | 0 | 0 | 0 | 0 | 0 | 1 | 0 |
| | 0 | 1 | 0 | 0 | 1 | 1 | 1 | 1 | 1 |
| T2: $\bar{A}B\bar{C}$ | 0 | 0 | 1 | 0 | 0 | 0 | 0 | 0 | 0 |
| | 0 | 0 | 1 | 0 | 0 | 0 | 0 | 0 | 1 |
| D12 | 0 | 0 | 1 | 0 | 0 | 0 | 0 | 1 | 0 |
| | 0 | 0 | 1 | 0 | 1 | 1 | 1 | 1 | 1 |
| T3: $\bar{A}\bar{B}C$ | 1 | 0 | 0 | 0 | 0 | 0 | 0 | 0 | 0 |
| | 1 | 0 | 0 | 0 | 0 | 0 | 0 | 0 | 1 |
| D13 | 1 | 0 | 0 | 0 | 0 | 0 | 0 | 1 | 0 |
| | 1 | 0 | 0 | 0 | 1 | 1 | 1 | 1 | 1 |
| | | | | 1 | | | | | |
| | | | | 1 | | | | | |
| | | | | 1 | | | | | |

SP